# EUROPEAN PATENT APPLICATION

(11) **EP 3 040 227 A1**
(43) Date of publication of application: **06.07.2016**
(21) Application number: 15150107.9
(22) Date of filing: 05.01.2015
(51) Int. Cl.: B60K 15/035, B60K 15/03

(54) **System and method for controlling fuel vapor recovery and controller for use in such a system and method**

(71) Applicant: Inergy Automotive Systems Research (Société Anonyme), 1120 Bruxelles (BE)
(72) Inventor: Madoux, Dominique, 7611 Rumes (BE); Belkhelfa, Yazid, 95380 Louvres (FR); Hill, David, Commerce Township, MI 48382 (US)
(74) Representative: Potdevin, Emmanuel Eric

(57) **Abstract**

It is proposed a system for controlling fuel vapor recovery through a venting line connecting a fuel tank (12) with a filter unit (18), the system comprising:
a sensor (40) configured for obtaining detection data regarding the presence of liquid fuel; the sensor being arranged for detecting liquid fuel in the venting line or in the vehicle tank near the venting line;
an isolation valve (20) arranged in the venting line; and
a controller (14) configured for controlling the isolation valve (20) based on detection data from the sensor (40).

## Description

### Field of the invention

The invention relates to a system and method for controlling fuel vapor recovery, and to a controller for use in such a system and method. More in particular the invention relates to a system and method for use with a vehicle fuel tank, for protecting a filter unit, typically a canister, connected to a vapor outlet of the vehicle fuel tank against saturation by liquid fuel.

### Background

Vehicle tanks, particularly fuel tanks for motor vehicles, are currently generally fitted, amongst other things, with a venting circuit. This circuit allows air to be introduced into the tank in the event of underpressure (in particular to compensate for the volume of liquid consumed) or allows gases contained in the tank to be removed in the event of overpressure (particularly in the event of overheating). This circuit also allows the gases that have to be discharged into the atmosphere to be routed and possibly filtered for the purpose of meeting the increasingly strict environmental requirements in this area. In a typical venting architecture of a fuel system different venting valves are used in order to achieve a pressure balance between the atmosphere and the tank. Further, the system is configured for preventing that fuel escapes out of the tank during any vehicle life situation.

To provide such protection, a fuel system comprises a series of venting valves, typically mechanical and float valves. Examples of such valves are a fill limit venting valve (FLVV), typically one per tank, and roll-over valves (ROV), typically up to four per tank. More generally, the venting circuit includes at least one valve that prevents, as far as possible, liquid from escaping the tank. In prior art systems this at least one venting valve must provide a rapid and reliable response when its operating conditions arise, but with minimal sensitivity to transient phenomena such as in particular very high flow rates, overpressure in the tank or low-amplitude waves. It must also ensure that any liquid carried entering into the canister (or the chamber containing a substance, usually activated carbon, which adsorbs the fuel vapors) in normal operation and during filling, is minimal, in order to avoid saturating the canister and making the decontamination of the gases discharged into the atmosphere ineffective. This phenomenon is generally called LCO (liquid carry over) in the jargon of the field. In other words, prior art systems attempt to make this at least one venting valve carry out the so-called Liquid Carry Over (LCO) and reduce or prevent the loss of liquid during a roll-over situation.

Many venting valves employ a float having an upper needle or tip which closes off an aperture for connecting the tank to the venting circuit (known as the ventilation aperture). One way of reducing the risk of LCO with this type of valve is that described in patent application WO 2006/125758 in the name of the Applicant, the content of which is incorporated by reference in the present application, and which consists in providing the valve with baffles so as to create a chicane or tortuous path for the vapor stream. This geometry prevents direct flow between the various partitions and therefore creates an optimal labyrinth effect.

Another way of solving this problem, which is described in patent application WO 2008/028894 also in the name of the Applicant, and the content of which is also incorporated by reference in the present application, consists in providing the lateral surface of the head of the float with a baffle and in adapting the internal geometry of the housing and of the head of the float so that the vapor streams from the tank impact on this baffle before going through the ventilation aperture. Yet another valve addressing the LCO problem is disclosed in granted patent US 8,763,626 B2 also in the name of the Applicant, and the content of which is incorporated by reference in the present application.

Yet another way to prevent that along with the fuel vapor an amount of fuel droplets which may have a damaging effect on the operation of the canister, reaches the canister, is to use a liquid vapor separator. An example of such a liquid vapor separator is disclosed in granted patent US 7,694,665 B2 in the name of the Applicant, and the content of which is incorporated by reference in the present application.

For the high-pressure fuel tanks, an isolation valve may be used to isolate the fuel tank emissions and prevent them from overloading the canister and vapor lines.

Although both architectures address the problems to a certain extent, there is a need for a controlled system that can prevent the Liquid Carry Over (LCO) during e.g. refueling, parking on a grade, stop and go traffic, dynamic road conditions, mountain driving. Optionally the system may also prevent or help to prevent the loss of liquid during the roll-over situation, in an improved manner.

### Summary

The object of embodiments of the invention is to provide a system and method for controlling fuel vapor recovery through a venting line connecting a fuel tank with a filter unit, in an improved manner, and in particular a system that is capable of protecting the filter unit against LCO in an improved manner.

According to a first aspect of the invention there is provided a system for controlling fuel vapor recovery through a venting line connecting a fuel tank with a filter unit. The system comprises: a sensor configured for obtaining detection data regarding the presence of liquid fuel; an isolation valve arranged in said venting line; and a controller configured for controlling said isolation valve based on detection data from said sensor. The sensor is arranged for detecting liquid fuel in said venting line or in said vehicle tank near said venting line.

The system of the invention will allow to measure and detect the presence of liquid fuel, in particular liquid droplets, in the venting line or about to enter the venting line, whereupon an isolation valve in the venting line may be closed. In that way the risk of having liquid fuel in the filter unit can be significantly reduced. Further, any venting valves between connecting the fuel tank with the venting line may have a more simple construction, and the use of liquid-vapor separators may be avoided.

According to an exemplary embodiment, the sensor is arranged in the venting line downstream of the isolation valve. In that way there can be provided a common sensor for any venting valve that may be associated with the tank, and, because the sensor is located downstream of the isolation valve the liquid fuel can be timely detected such that the isolation valve may be closed in time. However, it is noted that the sensor may also be provided in or near the venting valves, optionally in the tank, where it is also possible to detect liquid fuel that has entered or that is about to enter the venting line. "Near the venting valve" typically implies that the sensor is in an area located less than 50 mm from the venting line, and that the location is such that the sensor can detect liquid that is likely to enter the venting line.

According to an exemplary embodiment the venting line comprises a first portion connected to the canister and a plurality of second portions between said first portion and said vehicle tank, and wherein said sensor is arranged in said first portion. These second portions are typically intended for being connected to a number of venting valves, e.g. roll-over valves and/or a fill limit venting valve.

According to an exemplary embodiment the venting line, or the tank, or a venting valve of the tank is provided with a transparent part, and wherein the sensor is an optical sensor configured for detecting liquid droplets behind the transparent wall part, e.g. on the transparent wall part or in the venting line at a distance of the transparent wall part. Such a transparent wal part may be integrated e.g. in the wall of a venting line or venting valve. Alternatively there may be provided a tube section comprising a transparent wall part, which tube section can be inserted in the venting path through suitable couplings, e.g. using quick connectors. The optical sensor may comprise a light emitting device, e.g. a light emitting diode, arranged for emitting light, e.g. infrared light, through said transparent wall part, and a light receiving device, e.g. a photodiode, arranged for detecting reflected and/or transmitted light from said light emitting device. In a further developed embodiment there may be provided a first and a second opposite transparent wall part, the light emitting device may be arranged for emitting light through the first wall part and the light receiving device may be arranged for receiving at least a portion of said light through said second wall part.

According to an exemplary embodiment the sensor is a capacitive sensor or a Doppler effect sensor. More generally the sensor may be any sensor capable of detecting the presence of liquid fuel, and preferably capable of detecting a measure representative for an amount of liquid fuel in an area where the sensor is operational.

According to an exemplary embodiment the vehicle tank is provided with a roll-over valve and/or a fill limit venting valve, and the venting line is connected to an outlet of the roll-over valve and/or the fill limit venting valve.

According to an exemplary embodiment the controller is configured to close the isolation valve when the detection data indicates that a detected amount of liquid fuel is above a critical level. The controller may be configured to also take into account other parameters, such as the temperature in the tank, the pressure in the tank, the liquid level in the tank, the accelerations of the vehicle in different directions, the speed of the vehicle, the reid vapor pressure (RVP), etc, for taking the decision of whether or not to close the isolation valve. The controller may be configured to open (or to override an instruction for closing) the isolation valve when the temperature in the tank is above a critical temperature and/or when the pressure in the tank is above a critical pressure. Further, the controller may be configured to close the valve when the accelerations of the vehicle, the speed of the vehicle, and the reid vapor pressure (RVP) fulfill predetermined criteria. Indeed, the accelerations of the vehicle in each direction, the speed of the vehicle, and the reid vapor pressure (RVP) are typically a measure for the amplitude of any waves in the tank. If these parameters indicate that the amplitude of the waves is above a critical amplitude, it will be typically desirable to close the valve.

According to another aspect of the invention there is provided a method for controlling fuel vapor recovery through a venting line connecting a fuel tank with a filter unit. The method comprises: sensing data indicating whether liquid fuel is present in said venting line or in said vehicle tank near said venting line; and controlling an isolation valve arranged in said venting line based on the sensed data.

According to an exemplary embodiment the controlling comprises closing said isolation valve when it is detected that liquid fuel is present in said venting line or in said vehicle tank near said venting line. In a preferred embodiment the sensed data is a measure for an amount of liquid fuel in the sensed area, and the controlling may be done in function of this amount. E.g. the isolation valve may be closed when the amount is above a critical level. As described above, also other parameters may be taken into account for controlling the isolation valve.

According to an exemplary embodiment the detecting is performed in the venting line, preferably downstream of the isolation valve.

According to an exemplary embodiment the detecting is performed by emitting light through a transparent wall part in the venting line, or in the tank, or in a venting valve of the tank, and by sensing light transmitted through or reflected by liquid droplets on the transparent wall part or in the venting line.

According to yet another aspect there is provided a controller for controlling the feeding of a filter unit which is connected to a fuel tank through a venting line, said controller being configured for controlling an isolation valve arranged in said venting line based on detection data from a sensor, said detection data being an indication of whether liquid fuel is present in or near the venting line.

According to an exemplary embodiment the controller is configured for closing the isolation valve when the detection data indicates that liquid fuel is present in or near the venting line. In a preferred embodiment the sensed data is a measure for an amount of liquid fuel in the sensed area, and the controller may be configured to control the isolation valve in function of this measure. E.g. the isolation valve may be closed when the measure indicates that the amount is above a critical level. As described above, also other parameters may be taken into account by the controller for controlling the isolation valve. The controller may be configured to open (or to override an instruction for closing) the isolation valve when the temperature in the tank is above a critical temperature and/or when the pressure in the tank is above a critical pressure. Further, the controller may be configured to close the valve when the accelerations of the vehicle, the speed of the vehicle, and the reid vapor pressure (RVP) fulfill predetermined criteria. More generally the controller may be configured to close the isolation valve when measured data indicates that the amplitude of the waves in the tank is higher than a critical amplitude.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

Although certain features have been described only in connection with embodiments of the system, the skilled person understands that corresponding features may be present in the method or in the controller, and vice versa.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a first embodiment of a system of the invention;
Figure 2A-B, and 3 illustrate schematically a sensor of exemplary embodiments of the invention;
Figure 4 illustrates schematically a second embodiment of a system of the invention;
Figure 5 illustrates schematically a third embodiment of a system of the invention;
Figure 6 illustrates schematically a fourth embodiment of a system of the invention; and
Figure 7 illustrates schematically a fifth embodiment of a system of the invention.

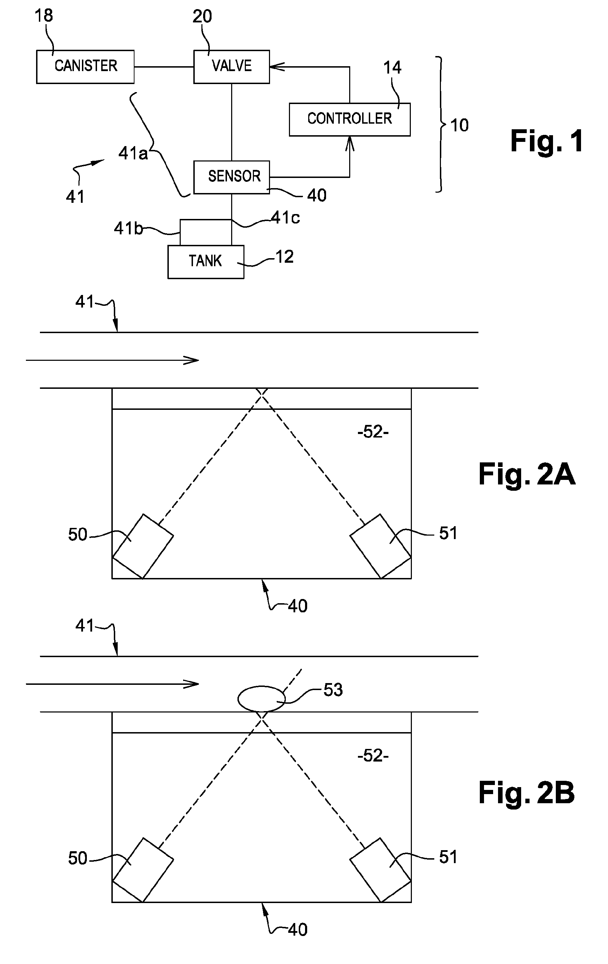

Figure 1 illustrates a first embodiment of a system 10 of the invention for controlling fuel vapor recovery through a venting line 41 connecting a vehicle fuel tank 10 with a filter unit, here a canister 18. The system 10 comprises a controller 14, a sensor module 40, and an isolation valve 20. The sensor module 40 is configured for detecting liquid fuel. The isolation valve 20 is arranged in the venting line. The controller 14 is configured for controlling the isolation valve 20 based on detection data from the sensor module 40. The sensor module 40 is arranged for detecting liquid fuel in said venting line 41, downstream of isolation valve 20. In the embodiment of figure 1 the venting line 41 comprises a first portion 41a connected to the canister 18 and two second portions 41 b, 41c between the first portion 41a and the vehicle tank 12. The sensor module 40 is arranged in the first portion 41a, downstream of isolation valve 20, such that the sensor module 40 can detect both fuel droplets coming from line 41b as well as fuel droplets coming from line 41c. In an alternative embodiment there may be provided sensor module 40 in both lines 41b and 41c.

The fuel tank 12 is operatively connected by the venting path 41 to an evaporative emissions control system that includes the purge canister 18 which is configured to collect fuel vapor from fuel tank 12 and to subsequently release fuel vapor to the engine. Moreover, based on the information coming from the sensor module 40, the controller 14 can regulate the operation of the isolation valve 20 in order to control the fuel vapor flow between the fuel tank 12 and the purge canister 18. Additionally, the controller 14 may be configured to regulate the operation of an engine (not shown) and its fuel delivery system (not shown).

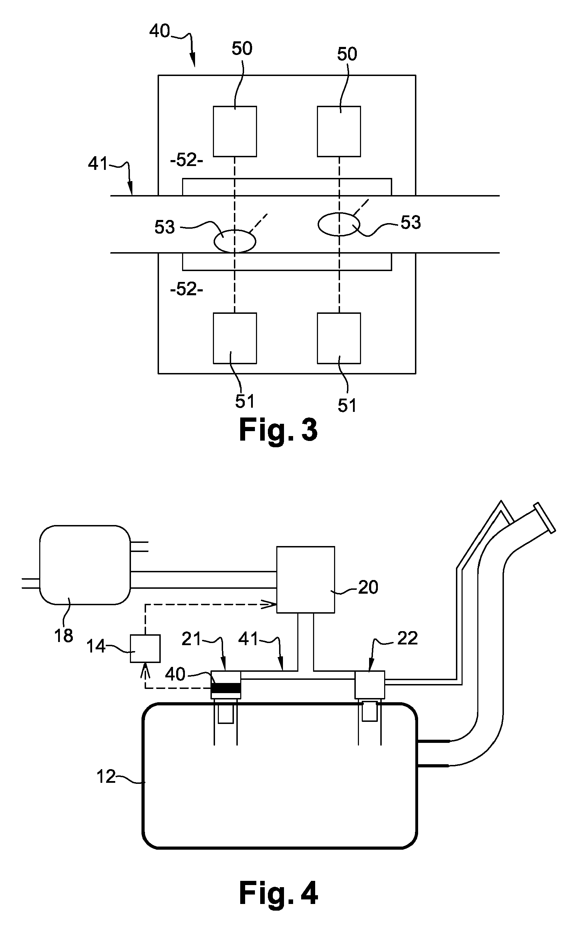

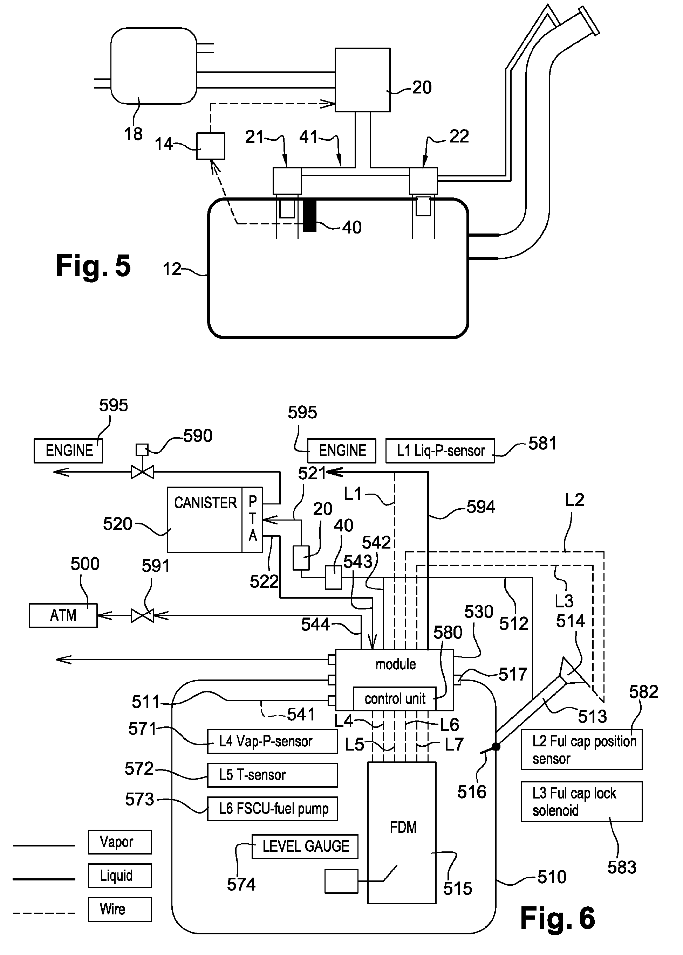

Although in the embodiment of figure 1 the sensor module 40 is located between the fuel tank 12 and the purge canister 18, nothing precludes locating the sensor module 40 elsewhere before the canister, in the tank for example, see also the embodiments of figures 4 and 5.

In a preferred embodiment of the invention the module sensor 40 detects directly the presence and optionally also a measure for the volume of fuel drops inside the venting path 41 and sends the sensed data to the controller 14. Depending on the sensed data, the controller 14 can open or close the isolation valve 20 in order to protect the canister 18. The controller 14 may also take into account other parameters, for deciding whether or not to close/open the isolation valve 20, such as the pressure in the tank, the temperature in the tank, the accelerations of the vehicle in different directions, the speed of the vehicle, the reid vapor pressure (RVP), etc. The controller 14 may be configured to open (or to override an instruction for closing) the isolation valve 20 when the temperature in the tank is above a critical temperature and/or when the pressure in the tank is above a critical pressure. Further, the controller 14 may be configured to close the isolation valve 20 when the accelerations of the vehicle, the speed of the vehicle, and the reid vapor pressure (RVP) fulfill predetermined criteria. Indeed, using the accelerations of the vehicle in each direction, the speed of the vehicle, and the reid vapor pressure (RVP) a good estimated of the amplitude of any waves in the tank may be determined. If these parameters indicate that the amplitude of the waves is above a critical amplitude, it will be typically desirable to close the isolation valve 20.

Figures 2A and 2B illustrates a first example of a sensor module 40 that may be used in embodiments of the invention. In the first example the module sensor 40 uses the principle of total internal reflection, and the venting line 41 is provided with a transparent part 52. The sensor module 40 is an optical sensor module configured for detecting liquid droplets on the transparent wall part 52. The optical sensor module 40 comprises a light emitting device 50, e.g. a light emitting diode, arranged for emitting light through said transparent wall part 52, and a light receiving device 51, e.g. photodiode, arranged for detecting reflected light. The light may be e.g. infrared light which is beamed at an angle, e.g. an angle between 30 and 60 degrees, from the light emitting device 50 through a transparent layer 52 into the venting path 41. If the venting path 41 is dry, most of this light is reflected back into the photodiode 51 by the transparent layer 52. If fuel droplets 53 are on the transparent layer 52, they reflect the light in different directions. The wetter the transparent layer 52 is, the less light makes it back to the photodiode 51. Hence the sensed light will be a measure for the amount of liquid fuel present on the transparent layer 52, in the venting path 41. When the amount of light reflected onto the photodiode 51 decreases below a preset level, the controller 14 closes the isolation valve 20 in order to protect the canister 18.

Figure 3 illustrates a second example of a sensor module 40 that may be used in embodiments of the invention. In the second example the module sensor 40 uses the principle of the transmission, and the venting line is provided with opposite transparent layers 52. The sensor module 40 is an optical sensor module configured for detecting liquid droplets on the transparent wall parts 52 and in the venting path between the transparent wall parts 52. The optical sensor module 40 comprises one or more light emitting devices 50, e.g. light emitting diodes, arranged for emitting light through said transparent wall parts 52, and one or more light receiving devices 51, e.g. photodiodes, opposite said light emitting devices 50, arranged for detecting transmitted light. The light may be e.g. infrared light which is beamed at a 180-degree angle from a light emitting device 50 through transparent layers 52 and the venting path 41. If the venting path 41 is dry, most of this light is transmitted into the photodiode 51 through the transparent layers 52 and the venting path 41. If fuel droplets 53 are on the transparent layer 52 or in the venting path 41, they reflect the light in different directions. The wetter the transparent layer 52 is, the less light makes it back to the photodiode 51. Hence the sensed light will be a measure for the amount of liquid fuel present on the transparent layer 52, in the venting path 41. When the amount of light transmitted into the photodiode 51 decreases below a preset level, the controller 14 closes the isolation valve 20 in order to protect the canister 18.

Figure 4 illustrates schematically a second embodiment of a system of the invention. In the second embodiment the module sensor 40 is located inside a venting valve 21 connected to an outlet of the tank 12. More generally the vehicle tank may provided with one or more venting valves 21, 22 such as a roll-over valve or a fill limit venting valve, wherein the venting line 41 is connected to an outlet of the roll-over valve and/or the fill limit venting valve. There may then be provided a sensor module in some or all venting valves. The controller 14 and the isolation valve 20 may be implemented according to any of the above disclosed exemplary embodiments.

Figure 5 illustrates schematically a third embodiment of a system of the invention. In the third embodiment the module sensor 40 is located in the tank 12 near the valve opening. Also in this embodiment the sensor 40 may be an optical sensor registering reflected or transmitted light in order to detect an amount of fuels droplets that is entering the venting path 41.

Figure 6 illustrates schematically a fourth embodiment of a system of the invention included in a vehicle storage system with vapor control. This system includes an embodiment of an electronic valve module 530 as disclosed in patent application EP13176402.9 in the name of the Applicant, which is incorporated herein by reference. The module 530 is provided on a flange mounted in a wall of a fuel tank 510. Although the module 530 is shown to be integrated in a flange mounted in the top wall of the tank, it is noted that this flange can also be mounted in a side wall or in the bottom wall of the tank 510. The module 530 has four ports 541-544. The first port 541 is connected with a vapor outlet 511 of the tank 510. Further there may be provided a (non-illustrated) roll-over protection as illustrated in the embodiment of figure 6. It is noted that in the illustrated embodiment, the vapor outlet 511 and the first port 541 are formed as a single piece. The second port 542 is in fluid communication with the inlet 521 of the canister 520. The outlet 522 of the canister 520 is in fluid communication with the third port 543. The fourth port 544 is connected to an air filter 591, which is in fluid communication with the atmosphere 500. When purging, the outlet 522 of the canister 520 is in communication with the atmosphere 500, so that air can be drawn into the outlet 522, through the canister medium, and through a canister purge valve 590 allowing fuel vapors stored in the canister 520 to be delivered to the engine 595.

Typical components that may be provided in the tank 510 are a fuel delivery module (FDM) 515, as well as a number of active components. The active components may comprise a vapor pressure sensor 571, a temperature sensor 572, a fuel system compile unit (FSCU) - fuel pump 573, and a level gauge 574. In a preferred embodiment, there is provided an electronic unit 580 in the module 530. This electronic control unit 580 may be connected through lines L4, L5, L6, L7 with the different active components in the tank 510. The tank 510 is provided with a filler pipe 513 closed by a fuel cap 514. There is provided an inlet check valve 516 at the connection between the tank body 510 and the filler pipe 513, which will block the communication between the filler pipe 513 and the tank body 510 when the tank is full. A recirculation line 512 is provided between an end part of the filler pipe 513 near the fuel cap 514, and the canister inlet 521. Further, there may be provided a fuel cap position sensor 582 and a fuel door lock solenoid 583, which communicate via respective lines L2 and L3 with the electronic control unit 580. Liquid fuel in the tank 510 can leave the tank through a line 594. Typically, there is provided a liquid pressure sensor 581 measuring the liquid pressure in line 594, at a location near the engine 595. This liquid pressure sensor 581 can also communicate electronically via line L1 with the control unit 580. The control unit 580 is further connected with a CAN bus 585 for communicating with the other electronic devices in the vehicle. Control signals received from any of the active components 571-574 and 582-584 can be used in the OBD strategy.

When the tank 510 needs refuelling, and the driver of the vehicle stops at a petrol station, the following steps may be performed. Typically, the driver will push a button to indicate that he wishes to fill the tank 510. As a result, the closure body of the module 530 is moved to the second position allowing fluid communication between the tank 510 and the canister inlet 521, and between the canister outlet 522 and the atmosphere 500. Also, the recirculation line 512 ensures fluid communication between an end of the filler pipe 513 and the inlet of the canister 521. Moving the closure body of the module 530 to the second position allows depressurizing the tank 510. In a following step, the pressure in the tank is measured by the vapor pressure sensor 571. As long as the pressure is too high, the fuel cap 514 may not be opened. When the measured pressure has dropped below a critical value, the fuel cap 514 may be opened. This is made possible by activating the fuel cap lock solenoid 583. Now the driver may open the fuel cap 514. This opening of the fuel cap 514 is detected by the fuel cap position sensor 582, and communicated to the control unit 580. During filling of the tank 510, fuel vapors may escape out of the tank through the second port 542 and through the canister 520 into the atmosphere. Also, any vapors present in the filler pipe 513, may escape through recirculation line 512, and through the canister 520 into the atmosphere. In this embodiment the venting path consists of the line portions 542, 512, 521, and optionally further lines (not shown) coming from one or more roll-over valves. In an exemplary embodiment there may be provided a sensor 40 for detecting liquid fuel droplets (according to any one of the embodiments disclosed above) in the venting path as well as an isolation valve 20. The control unit 580 may then be configured to receive the data sensed by the sensor 40 and to control the isolation valve 20 in function of the sensed data. Alternatively there may be provided a separate controller for controlling the isolation valve. As mentioned above the controlling of the isolation valve 20 may be based also on other parameters, such as the measured pressure in the tank, the temperature in the tank, the level of fuel in the tank, etc.

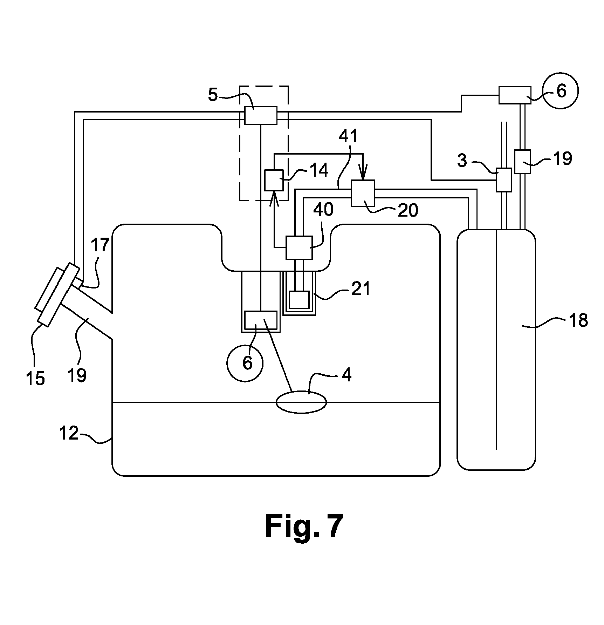

Figure 7 illustrates schematically a fifth embodiment of a system according to the invention. The refueling system comprises a fuel tank 12 which is equipped with a filler pipe 13 having a filler door 15 at its end. The filler door 15 comprises a filler door sensor 17 adapted to detect whether the filler door 15 is open or closed. The system comprises one or more rollover valves 21 on the fuel tank 12. A canister 18 is in vapor communication with the fuel tank 12 via a venting line 41 and is adapted to adsorb fuel vapor generated inside the fuel tank 12. The canister 18 is also in communication with the engine intake manifold via a purge solenoid 19 and selectively in communication with the atmosphere via a canister drain cut valve 3, also referred to as a canister vent solenoid, coupled to the canister 18 and adapted to discharge air. By using the canister drain cut valve 3, the fuel tank 12 can be effectively sealed, such that no fuel vapor can escape to the atmosphere, causing fuel to back fill up the filler pipe 13 ultimately ending the refueling process. A contact-less fuel level detecting device 6 with a float arm 4 is capable of detecting the amount of fuel in the fuel tank 12. The system also includes an ignition sensor 6 adapted to detect whether the ignition of the combustion engine is switched on or off, and a refueling controller 5 adapted to open the canister drain cut valve 3 when the ignition sensor 6 detects that the ignition of the combustion engine is switched off. The refueling controller 5 is adapted to close the canister drain cut valve 3 when the fuel level detected by the fuel level detecting device 6 reaches a prescribed height. Additionally, the refueling controller 5 is adapted to close the canister drain cut valve 3 when during a prescribed period of time, the ignition sensor 6 continuously detects that the ignition is switched off and the filler door sensor 17 continuously detects that the filler door 15 is closed.

A sensor 40 is located in the venting line 41. The sensor 40 is configured for detecting liquid fuel. An isolation valve 20 is arranged in the venting line 41. A controller 14 is configured for controlling the isolation valve 20 based on detection data from the sensor module 40. The sensor module 40 is arranged for detecting liquid fuel in the venting line 41, downstream of the isolation valve 20. Based on the information coming from the sensor 40, the controller 14 can regulate the operation of the isolation valve 20 in order to control the fuel vapor flow between the fuel tank 12 and the purge canister 18. The skilled person understands that controller 14 and refueling controller 5 may be integrated in one central controller or may be separate controllers. The sensor 40 may detect directly the presence and optionally also a measure for the volume of fuel drops inside the venting path 41 and may send the sensed data to the controller 14. Depending on the sensed data, the controller 14 can open or close the isolation valve 20 in order to protect the canister 18. The controller 14 may also take into account other parameters, for deciding whether or not to close/open the isolation valve 20, such as the pressure in the tank, the temperature in the tank, the accelerations of the vehicle in different directions, the speed of the vehicle, the reid vapor pressure (RVP), etc., as has been described above for the other embodiments.

A person of skill in the art would readily recognize that steps of various above-described methods can be performed by programmed computers. Herein, some embodiments are also intended to cover program storage devices which are machine or computer readable and encode machine-executable or computer-executable programs of instructions, wherein said instructions perform some or all of the steps of said above-described methods.

The functions of the various elements shown in the figures, including any functional blocks labelled as "controller" or "control unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage.

Whilst the principles of the invention have been set out above in connection with specific embodiments, it is to be understood that this description is merely made by way of example and not as a limitation of the scope of protection, which is determined by the appended claims.

## Claims

1. A system for controlling fuel vapor recovery through a venting line connecting a fuel tank with a filter unit, said system comprising:
a sensor configured for obtaining detection data regarding the presence of liquid fuel; said sensor being arranged for detecting liquid fuel in said venting line or in said vehicle tank near said venting line;
an isolation valve arranged in said venting line; and
a controller configured for controlling said isolation valve based on detection data from said sensor.

2. The system of claim 1, wherein the sensor is arranged in the venting line downstream of said isolation valve.

3. The system of claim 1 or 2, wherein the venting line comprises a first portion connected to the canister and a plurality of second portions between said first portion and said vehicle tank, and wherein said sensor is arranged in said first portion.

4. The system of any one of the previous claims, wherein the venting line, or the tank, or a venting valve of the tank is provided with a transparent part, and wherein the sensor is an optical sensor configured for detecting liquid droplets behind the transparent wall part.

5. The system of claim 4, wherein the optical sensor comprises a light emitting device arranged for emitting light through said transparent wall part, and a light receiving device arranged for detecting reflected and/or transmitted light from said light emitting device.

6. The system of any one of the claims 1-3, wherein the sensor is a capacitive sensor or a Doppler effect sensor.

7. The system of any one of the previous claims, wherein the vehicle tank is provided with a roll-over valve and/or a fill limit venting valve, and the venting line is connected to an outlet of the roll-over valve and/or the fill limit venting valve.

8. The system of any one of the previous claims, wherein the controller is configured to close the isolation valve when the detection data indicates that a detected amount of liquid fuel is above a critical level.

9. The system of any one of the previous claims, wherein the vehicle tank is provided a venting valve, and wherein the sensor is arranged against or near the venting valve.

10. A method for controlling fuel vapor recovery through a venting line connecting a fuel tank with a filter unit, said method comprising:
sensing data indicating whether liquid fuel is present in said venting line or in said vehicle tank near said venting line;
controlling an isolation valve arranged in said venting line based on the sensed data.

11. The method of claim 10, wherein said controlling comprises closing said isolation valve when it is detected that liquid fuel is present in said venting line or in said vehicle tank near said venting line.

12. The method of claim 10 or 11, wherein the detecting is performed in the venting line.

13. The method of any one of the claims 10-12, wherein the detecting is performed by emitting light through a transparent wall part in the venting line, or in the tank, or in a venting valve of the tank, and by sensing light transmitted through or reflected in the venting line, or in the tank, or in the venting valve, such that said reflected or transmitted light is influenced by the presence of liquid droplets on the transparent wall part and/or in the venting line, or in the tank, or in the venting valve.

14. A controller for controlling the feeding of a filter unit which is connected to a fuel tank through a venting line, said controller being configured for controlling an isolation valve arranged in said venting line based on detection data from a sensor, said detection data being an indication of whether liquid fuel is present in or near the venting line.

15. The controller of claim 14, wherein the controller is configured for closing the isolation valve when the detection data indicates that liquid fuel is present in or near the venting line.
